# EUROPEAN PATENT APPLICATION

(11) **EP 4 572 467 A1**
(43) Date of publication of application: **18.06.2025**
(21) Application number: 23852906.9
(22) Date of filing: 07.08.2023
(51) Int. Cl.: H04W 72/04, H04W 72/23, H04W 72/21, H04L 5/00, H04L 5/14

(54) **OPERATING METHOD OF DEVICE IN WIRELESS COMMUNICATION SYSTEM, AND DEVICE USING METHOD**

(30) Priority: 11.08.2022 KR 20220100634
(71) Applicant: LG Electronics Inc., Yeongdeungpo-gu Seoul 07336 (KR)
(72) Inventor: YOU, Hyangsun, Seoul 06772 (KR); KO, Hyunsoo, Seoul 06772 (KR); KIM, Seonwook, Seoul 06772 (KR); SHIM, Jaenam, Seoul 06772 (KR)
(74) Representative: Plasseraud IP
(86) International application number: PCT/KR2023/011557
(87) International publication number: WO 2024/035026

(57) **Abstract**

An operating method of a device in a wireless communication system, and the device are provided. The device can be a terminal, a chipset, or a base station. The terminal receives first PUCCH resource configuration information and second PUCCH resource configuration information, which are independent of each other, and applies the first PUCCH resource configuration information or the second PUCCH resource configuration information to each of a plurality of slots so as to transmit a PUCCH through the plurality of slots. The first PUCCH resource configuration information or the second PUCCH resource configuration information is applied to the specific slot on the basis of whether a specific slot from among the plurality of slots is a half duplex slot or a full duplex slot.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

In an FD environment, both DL resources and UL resources exist in time resources that operate as FDs (e.g., FD symbols/FD slots). The user equipment (UE) can perform the transmission through FD time resource or non-FD time resource (e.g., HD time resource) during repeated transmission of uplink channel. In this case, there may be cases where the frequency resources allocated for transmission of the uplink channel in the FD time resource overlap with a band other than the uplink subband. In this case, it is necessary to clearly specify the uplink channel transmission method of the UE.

In addition, when FD time resources and HD time resources coexist in a time duration during which repeated transmission of an uplink control channel is performed, it has not been clearly specified in the past how to set the transmission resources of the uplink control channel. This needs to be clearly specified.

### DISCLOSURE

### TECHNICAL PROBLEM

The technical problem that the present disclosure aims to solve is to provide a method of operating a device in a wireless communication system and a device that uses the method.

### TECHNICAL SOLUTION

Provided are a method of operating a device in a wireless communication system and the device using the method. The method includes: receiving first physical uplink control channel (PUCCH) resource configuration information and second PUCCH resource configuration information that are independent of each other and transmitting a PUCCH over a plurality of slots by applying the first PUCCH resource configuration information or the second PUCCH resource configuration information to each slot of the plurality of slots. Here, the first PUCCH resource configuration information or the second PUCCH resource configuration information is applied to a specific slot of the plurality of slots based on whether the specific slot is a half-duplex (HD) slot or a full-duplex (FD) slot.

### ADVANTAGEOUS EFFECTS

According to the method of the present disclosure, even when a plurality of slots performing PUCCH repeated transmission include both an HD slot and an FD slot, PUCCH repeated transmission can be performed using appropriate resources.

That is, the efficiency of resource use increases in PUCCH repeated transmission.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SB-FD or SS-FD exist together.
FIG. 14 shows examples of a first time resource, a second time resource, a first frequency resource and a second frequency resource.
FIG. 15 shows another example of a first time resource, a second time resource, a first frequency resource, and a second frequency resource.
FIG. 16 illustrates a case where there are multiple BWPs in a time resource where an HD slot and an SBFD slot coexist.
FIG. 17 illustrates an operation method of a UE in a wireless communication system.
FIG. 18 illustrates a method of applying PUCCH resource configuration information when performing PUCCH repeated transmission in a situation where an HD slot and an FD slot coexist.
FIG. 19 illustrates a signaling process between a base station and a UE according to the method described in FIG. 17.
FIG. 20 illustrates a wireless device that can be applied the present specification.
FIG. 21 shows an example of a signal processing module structure.
FIG. 22 shows another example of the structure of a signal processing module in a transmission device.
FIG. 23 shows an example of a wireless communication device according to an implementation example of the present disclosure.
FIG. 24 shows an example of the processor 2000.
FIG. 25 shows an example of the processor 3000.
FIG. 26 shows another example of a wireless device.
FIG. 27 shows another example of a wireless device applied to the present specification.
FIG. 28 illustrates a mobile device to which the present specification applies.
FIG. 29 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

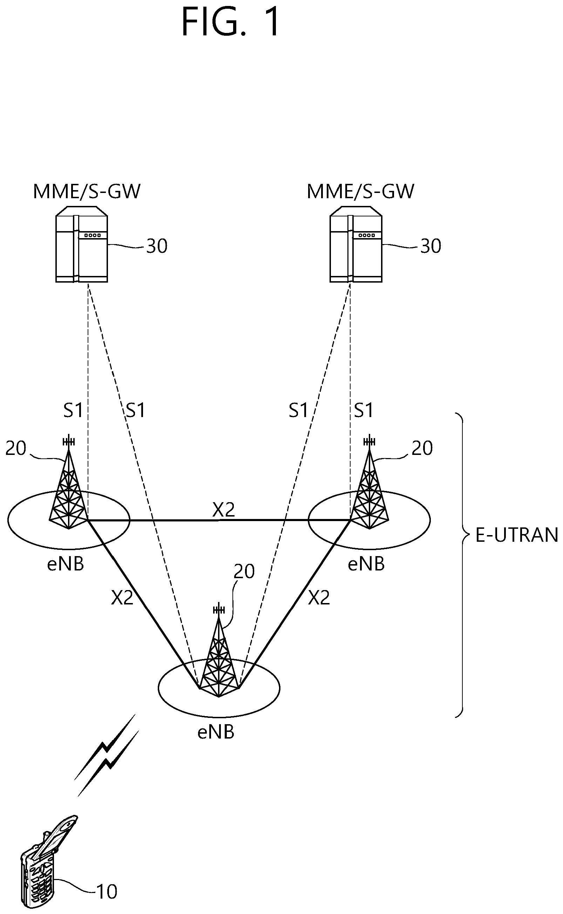

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

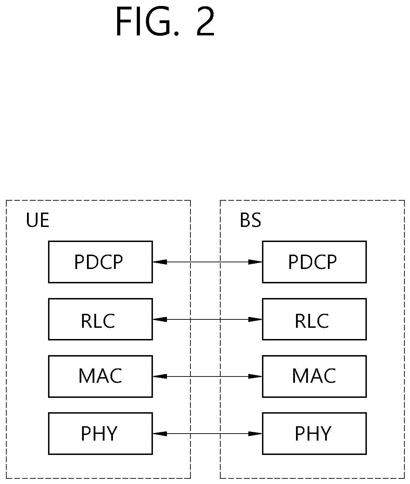

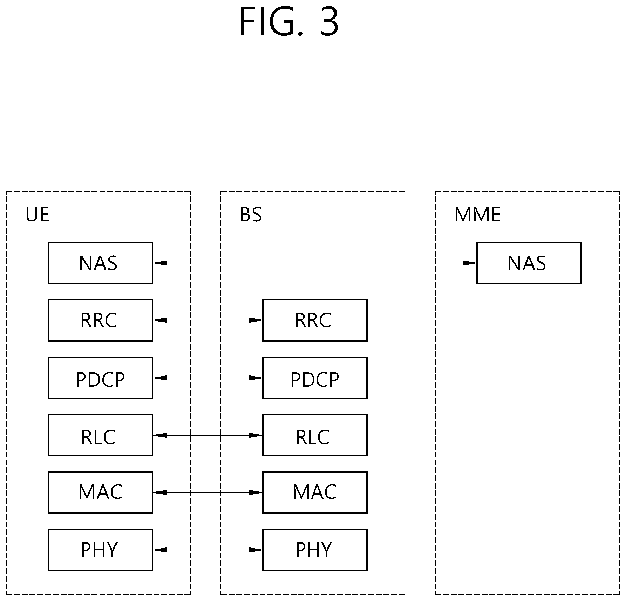

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

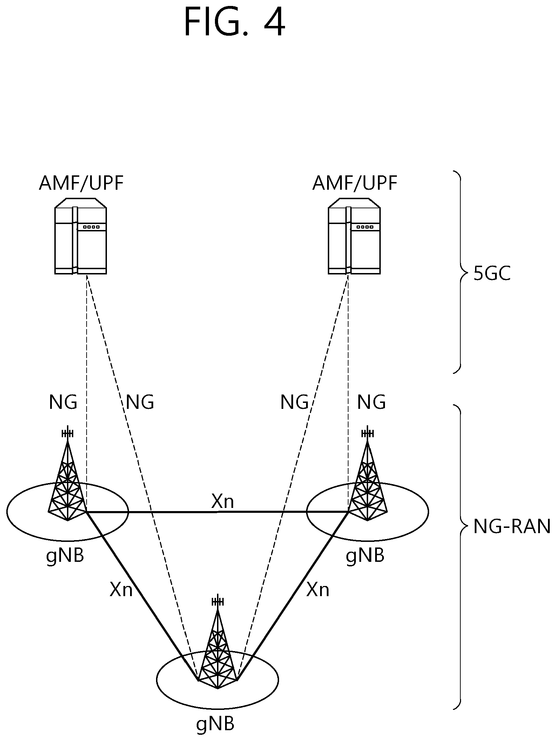

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

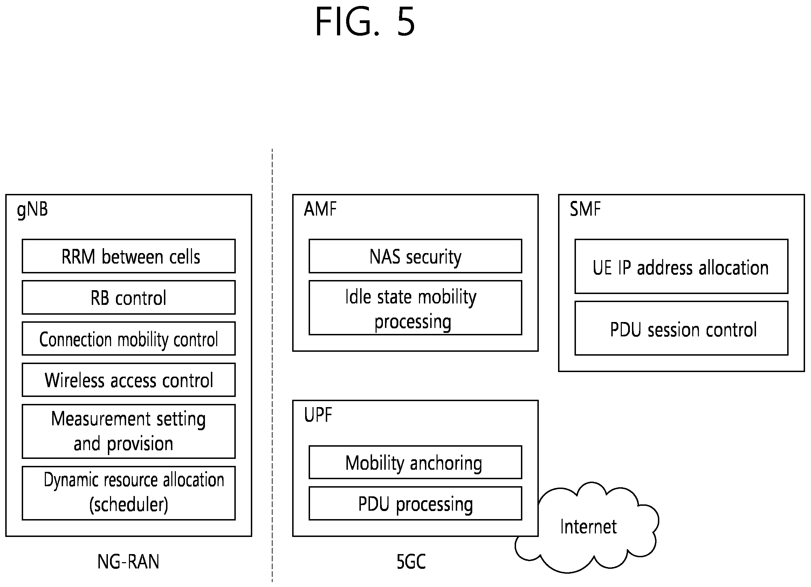

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

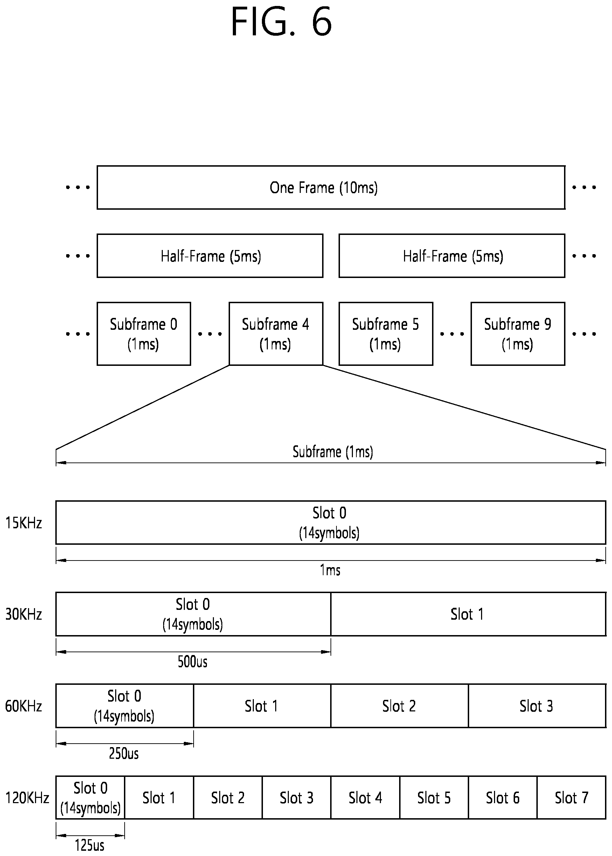

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| SCS(15*2^{µ}) | N^{slot}_{symb} | N^{frame, µ}ₛₗₒₜ | N^{subframe, µ}ₛₗₒₜ |
|---|---|---|---|
| 60KHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

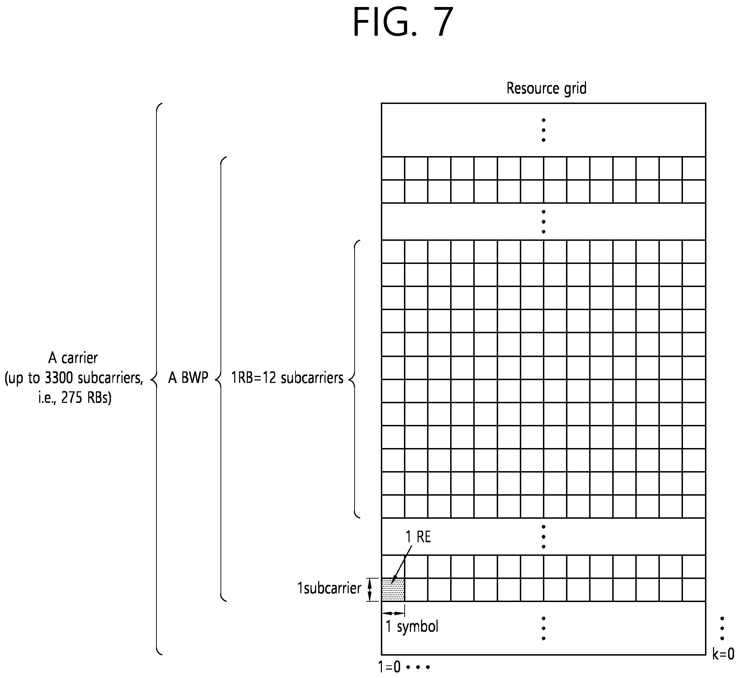

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

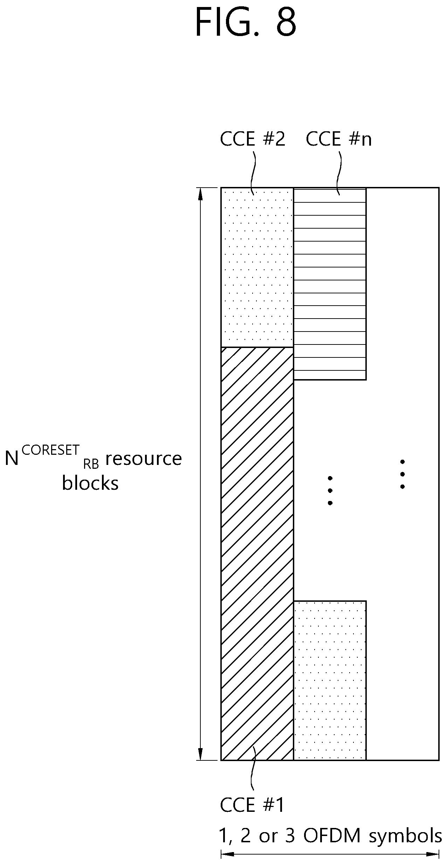

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

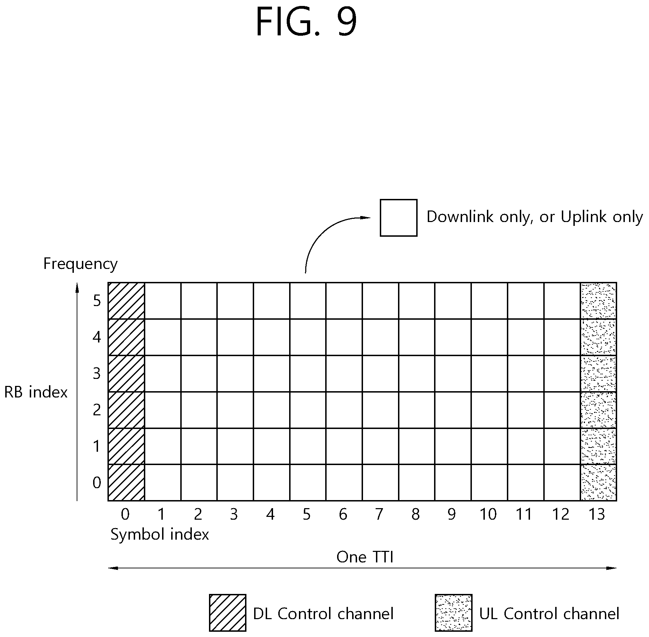

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

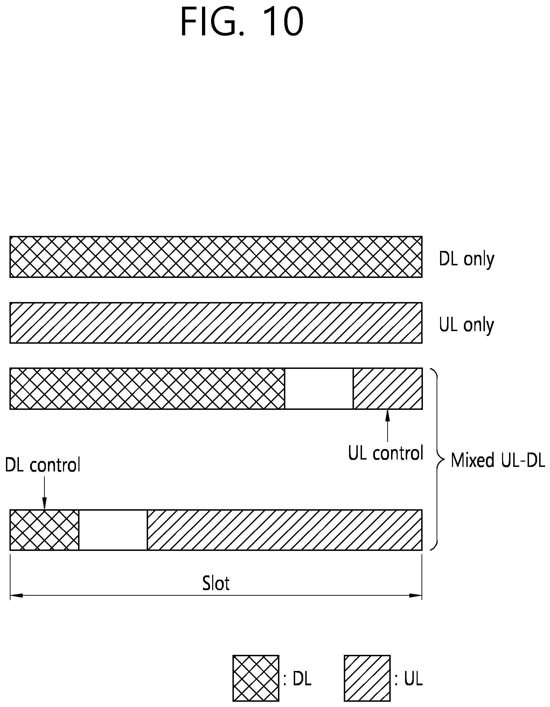

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
DL region + Guard period (GP) + UL control region,
DL control region + GP + UL region.
DL region: (i) DL data region, (ii) DL control region + DL data region.
UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.
1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

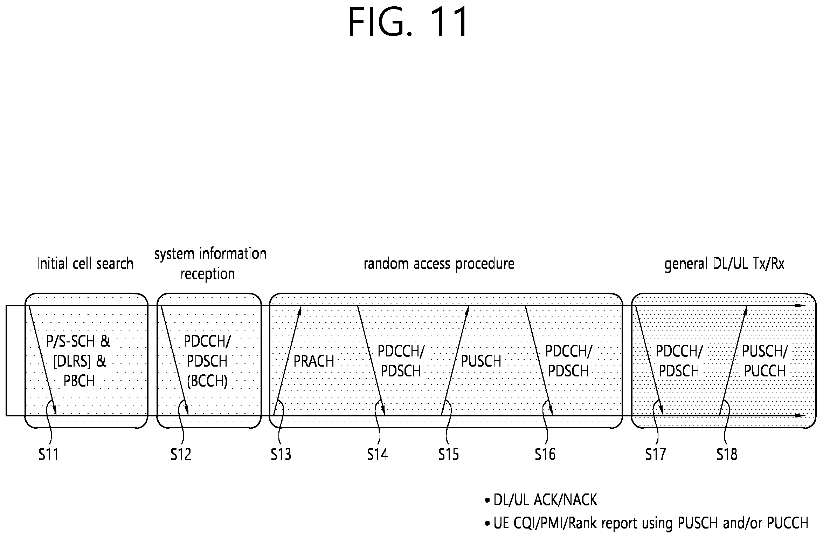

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

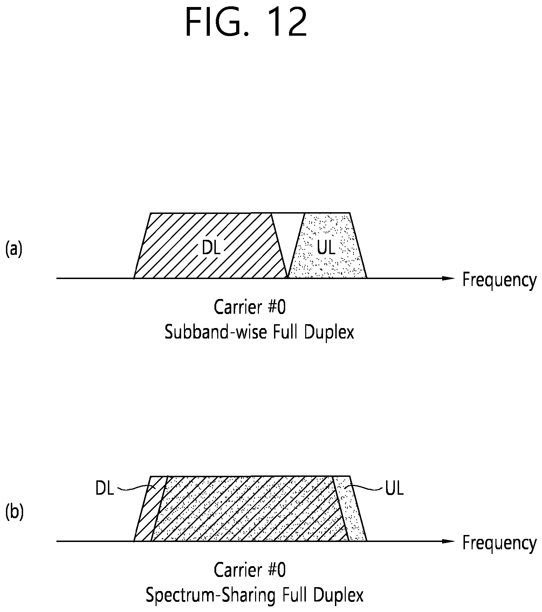

FIG. 12 shows examples of how to apply full duplex within an intra-carrier.

Referring to FIG. 12, the full duplex method includes subband-wise full duplex (hereinafter, SB-FD) as shown in (a) of FIG. 12 and spectrum sharing full duplex (hereinafter, SS-FD as shown in (b) of FIG. 12 may be considered.

In the case of SB-FD, DL and UL are transmitted and received through different frequency resources within the same carrier (e.g., carrier #0). That is, different frequency resources are used in DL and UL for the same time resource.

In the case of SS-FD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SB-FD or SS-FD operations can be performed on time resources that perform full duplex operations.

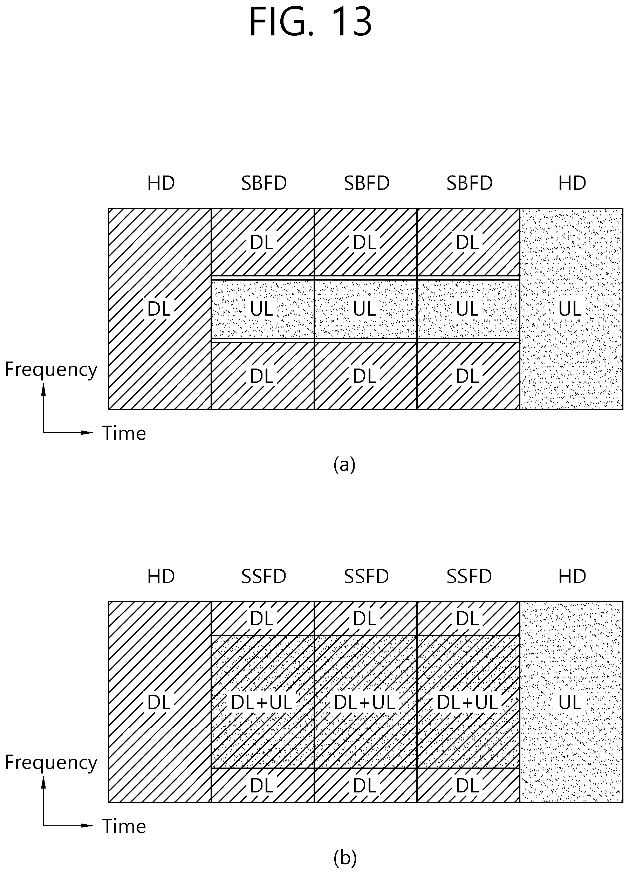

FIG. 13 shows an example in which a time resource operating in half duplex (HD) and a time resource operating in full duplex (FD) such as SB-FD or SS-FD exist together.

In (a) of FIG. 13, some time resources operating as SB-FD (=SBFD) are indicated as SBFD, and time resources operating as HD are indicated as HD. In (b) of FIG. 13, some time resources operating as SS-FD (=SSFD) are indicated as SSFD, and time resources operating as HD are indicated as HD. The unit of time resource may be, for example, a slot or symbol.

In time resources operating as SB-FD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SS-FD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SB-FD and a slot resource that operate as SS-FD are referred to as a SB-FD slot and a SS-FD slot, respectively. The SS-FD slot and the SS-FD slot are also collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the above discussion, the present disclosure proposes a method for setting downlink (DL) and uplink (UL) resources for intra-carrier full duplex operation.

In the following, the term network may be interpreted as gNB or CU/DU. Additionally, the term UE may be interpreted as being replaced with MT of IAB-node.

### A. Characteristics of DL/UL time/frequency resources for SB-FD and SS-FD operation

In the present disclosure, it is assumed that a cell (base station) can perform both DL transmission and UL reception in the same time resource in an FD scheme such as SB-FD or SS-FD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

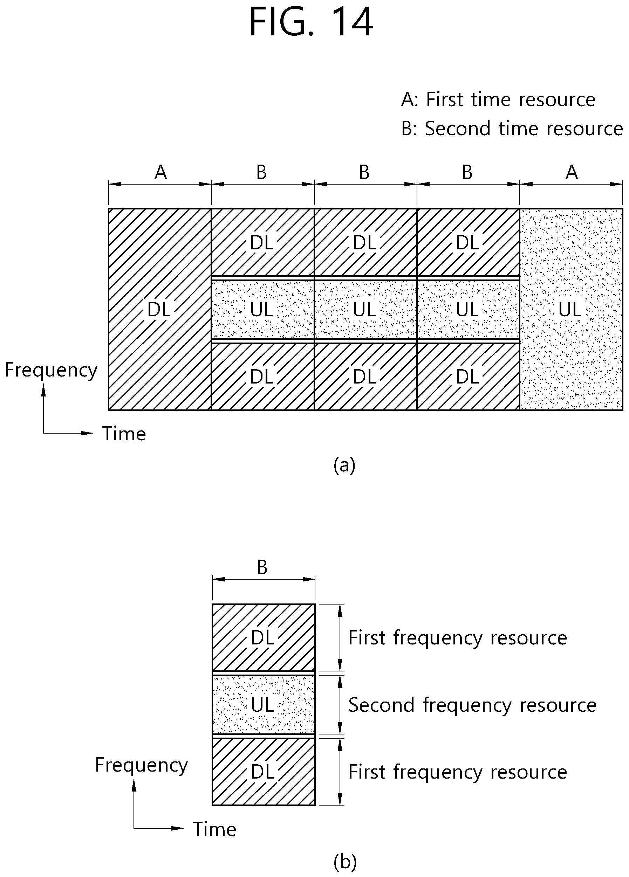

FIG. 14 shows examples of a first time resource, a second time resource, a first frequency resource, and a second frequency resource.

Referring to (a) of FIG. 14, in the first time resource (represented by A), it is operated in HD. In the second time resource (represented by B), for example, it may be operated as SB-FD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

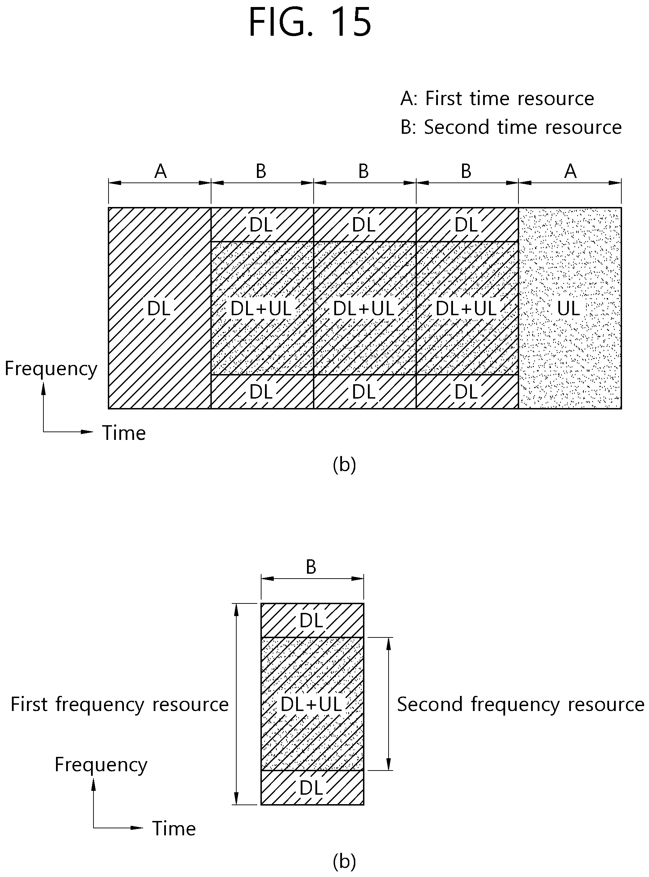

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SB-FD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SS-FD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SB-FD operation, the second frequency resource may be composed of contiguous frequency resources, and the first frequency resource may be composed of non-contiguous frequency resources. At this time, the first frequency resource may be composed of multiple (e.g., two) sets of continuous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) sets of consecutive frequency resources. This is to reduce interference from DL transmission on UL resources in adjacent carriers by placing the second frequency resource used for DL at the center of the frequency resources constituting the cell.
4) When performing SS-FD operation, the second frequency resource may be composed of some frequency resources of the first frequency resource. At this time, the second frequency resource may be configured to have fewer X physical resource blocks (PRBs) on one or both edges than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE. The network performs DL transmission to the UE in the '1-1 time resource within the first time' and the 'first frequency resource within the second time resource', and performs UL reception from the UE in the '1-2 time resource within the first time resource' and the 'second frequency resource within the second time resource'.

The UE may receive all or part of the information about the 'first time resource' and the 'second time resource', and the 'first frequency resource' and the 'second frequency resource' from the network, and determine the location of the resource. The UE performs DL reception from the network through all or part of the '1-1 time resource within the first time' and the 'first frequency resource within the second time resource', and performs UL transmission to the network through the '1-2 time resource within the first time resource' and the 'second frequency resource within the second time resource'.

For the FD (SBFD and/or SSFD) operation of the cell, the UE may determine information about the time resources (hereinafter referred to as SBFD symbols) that operate as SBFD. For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it may consider a fallback to TDD operation where DL or UL operation is performed over the full band, rather than SBFD operation over DL/UL subbands.

The UE can perform the same TDD operation (half duplex operation) as an existing UE in resources that are not determined to be SBFD symbols. That is, only DL or UL operations can be performed using all frequency resources of the cell.

In the existing NR TDD carrier, the base station performs only one operation, either downlink or uplink, in a specific time resource. In this case, the base station always operates in downlink in the time resource where SSB is transmitted.

For UEs operating in existing TDD, the following is assumed for symbols in which SSB is transmitted.
1) SS/PBCH transmission symbols cannot be configured for uplink by TDD configuration (e.g., TDD-UL-DL-ConfigCommon and/or TDD-UL-DL-ConfigDedicated).
2) SS/PBCH transmission symbols cannot be set to uplink by SFI (slot format indication) of DCI format 2_0.
3) When SS/PBCH is transmitted in a symbol set as flexible by TDD configuration (e.g., TDD-UL-DL-ConfigCommon and/or TDD-UL-DL-ConfigDedicated), if the uplink transmission of the UE overlaps with the SS/PBCH symbol, the uplink transmission is not performed. In case of SRS, if a flexible symbol overlaps with an SS/PBCH symbol, SRS transmission is not performed in the overlapped symbol(s).

Meanwhile, in FDR environments such as SB-FD and SS-FD, both DL and UL resources can exist in the same time resource from the cell perspective. Therefore, the base station can perform uplink reception while transmitting downlink.

Therefore, even if SS/PBCH is transmitted in a time resource where the cell performs FDR operation, the base station can perform uplink reception while transmitting SS/PBCH.

Meanwhile, according to the current standard specifications, the UE cannot perform uplink transmission on the symbol resources where SS/PBCH is transmitted. In this case, the FDR operation cannot be performed on the SS/PBCH transmission time resources.

### <PDSCH/PUSCH/PUCCH repetition>

According to the existing NR standard specification, repetition is supported for transmission of PDSCH, PUSCH, and PUCCH. The repetition operation of PDSCH, PUSCH, and PUCCH is as follows.

### 1)PDSCH

When a PDSCH is transmitted repeatedly K times, the PDSCH is transmitted repeatedly through K consecutive slots from a slot in which the PDSCH is instructed to be transmitted. The symbol resource through which the PDSCH is transmitted within a slot is determined through the TDRA field of the PDSCH, and the same symbol resource is used for K slots. If at least one symbol among the symbols allocated for transmission of the PDSCH in a specific slot that constitutes PDSCH transmission cannot be used for PDSCH transmission, the transmission of the PDSCH in that slot is dropped/omit.

### 2) PUSCH

There are two types of PUSCH repetitions: PUSCH repetition type A and PUSCH repetition type B.
a. PUSCH repetition type A

For PUSCH repetition type A, the repetition operation varies depending on the value of the parameter (e.g., 'AvailableSlotCounting') set by the higher layer signal.

When PDSCH is transmitted repeatedly K times, if'AvailableSlotCounting' is 'enabled', PUSCH is transmitted repeatedly through K available slots from a slot in which PUSCH is instructed to be transmitted. At this time, the below slots are excluded from the available slots.

If at least one symbol among the symbols allocated for PUSCH transmission overlaps with a symbol indicated as a downlink symbol by tdd-UL-DL-ConfigurationCommon or tdd-UL-DL-ConfigurationDedicated.

If at least one symbol among the symbols allocated for PUSCH transmission overlaps with a symbol of SSB having an index provided by ssb-PositionsInBurst.

If 'AvailableSlotCounting' is not 'enabled' or is absent, the PUSCH is repeatedly transmitted over K consecutive slots from a slot in which the PUSCH is instructed to be transmitted.

The symbol resources through which the PUSCH is transmitted within the K slots that constitute the PUSCH transmission are determined through the TDRA field for the PUSCH, and the same symbol resources are used for the K slots. If at least one symbol among the symbols allocated for PUSCH transmission in a specific slot that constitutes PUSCH transmission cannot be used for PUSCH transmission, the transmission of PUSCH in that slot is dropped/omitted.

### b. PUSCH repetition type B

For PUSCH repetition type B, when the number of symbols allocated for PUSCH transmission through the TDRA table is S and the number of PUSCH repetitions is K, K nominal repetitions are configured with S*K consecutive symbol resources starting from the first symbol in a slot in which the PUSCH is instructed to be transmitted. At this time, each nominal repetition consists of S symbols.

Each nominal repetition consists of one or more actual repetitions. Each actual repetition consists of two or more consecutive symbols. Here, invalid symbols are excluded from the symbol resources that constitute the actual repetition. After excluding invalid symbols from the symbol resources that constitute a nominal repetition, consecutive symbol resources constitute one actual repetition. At this time, the actual repetition is composed of symbols within the same slot. If the consecutive symbol resources include a slot boundary, different actual repetitions are composed based on the slot boundary.

At this time, invalid symbols include:
i) Downlink symbols configured by tdd-UL-DL-ConfigurationCommon or tdd-UL-DL-ConfigurationDedicated,
ii) Invalid symbol indicated by invalid symbol pattern indicator field in UL grant,
iii) SS/PBCH symbol,
iv) Symbol(s) for a CORESET for Type0-PDCCH CSS set indicated by pdcch-ConfigSIB1 in MIB,
v) Invalid symbols for DL-UL switching configured by RRC.

For the actual repetitions that constitute a PUSCH transmission, if at least one symbol within the actual repetition cannot be used for a PUSCH transmission, the PUSCH transmission in that actual repetition is dropped/omitted.

### 3) PUCCH

When a PUCCH is transmitted repeatedly K times, the PUCCH is transmitted repeatedly through K available slots starting from a slot in which the PUCCH is instructed to be transmitted. At this time, the below slots are excluded from the available slots.
i) If at least one symbol among the symbols allocated for PUCCH transmission overlaps with a symbol indicated as a downlink symbol by tdd-UL-DL-ConfigurationCommon or tdd-UL-DL-ConfigurationDedicated,
ii) If at least one symbol among the symbols allocated for PUCCH transmission overlaps with a symbol of SSB having an index provided by ssb-PositionsInBurst.

The same symbol resources are used for PUCCH transmission for the K slots that constitute PUCCH transmission. If at least one symbol among the symbols allocated for PUCCH transmission in a specific slot that constitutes PUCCH transmission cannot be used for PUCCH transmission, the PUCCH transmission in that slot is dropped/omitted.

When a UE transmits a PUCCH in an SBFD environment, the frequency resources available for uplink (UL) transmission may be different in an HD slot operating in half duplex and an SBFD slot operating in full duplex (e.g., SBFD).

The present disclosure assumes SBFD operation where a cell (base station/network) performs downlink (DL) and UL operations simultaneously using different frequency resources (e.g., different sub-bands) in the same time resource. However, the contents of the present disclosure can also be applied when a cell performs SSFD operation.

When a cell operates in SBFD, there may be frequency resources (e.g., DL subbands and/or guard subbands) that cannot be used for UL operation within the UL BWP resources in which the UE operates.

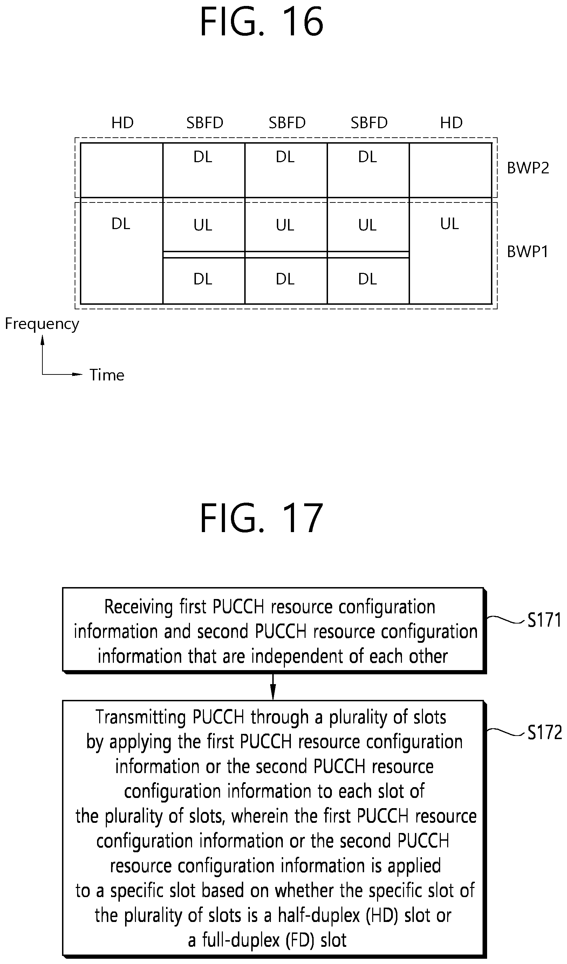

FIG. 16 illustrates a case where there are multiple BWPs in a time resource where an HD slot and an SBFD slot coexist.

Referring to FIG. 16, BWP1 consists of only DL frequency resources or UL frequency resources in the HD slot. On the other hand, DL frequency resources and UL frequency resources coexist in the SBFD slot.

BWP2 may only have DL frequency resources in SBFD slots.

The present disclosure describes a method for determining a transmission frequency resource of a PUCCH when there is a frequency resource (e.g., a DL subband, a guard subband) that cannot be used for UL transmission within a UL BWP resource in an SBFD slot.

In this disclosure, it is assumed that the frequency resource through which a PUCCH is transmitted in a specific slot consists of P consecutive PRBs starting from the lowest PRB (with a resource index).

At this time, the lowest PRB and P may be as follows.

### 1) Lowest PRB

The lowest PRB may mean the first PRB if PUCCH does not perform frequency hopping.

The lowest PRB may mean the first PRB or the second PRB depending on the hop number when PUCCH performs frequency hopping.

The first PRB may be set via 'startingPRB' in 'PUCCH-Resource' included in 'PUCCH-Config', which is an information element (IE).

The second PRB may be configured via 'secondHopPRB' in 'PUCCH-Resource' included in 'PUCCH-Config'

### 2) P

The value of P indicates the PRB size in which PUCCH is transmitted.

For PUCCH format 0/1/4, the value of P may be equal to 1.

For PUCCH format 2/3, the value of P may be set via ''nofPRBs' in 'PUCCH-format2' and 'PUCCH-format3' included in 'PUCCH-Config'.

The following table illustrates part of 'PUCCH-Config' used to set UE-specific PUCCH parameters per BWP.

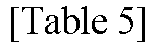

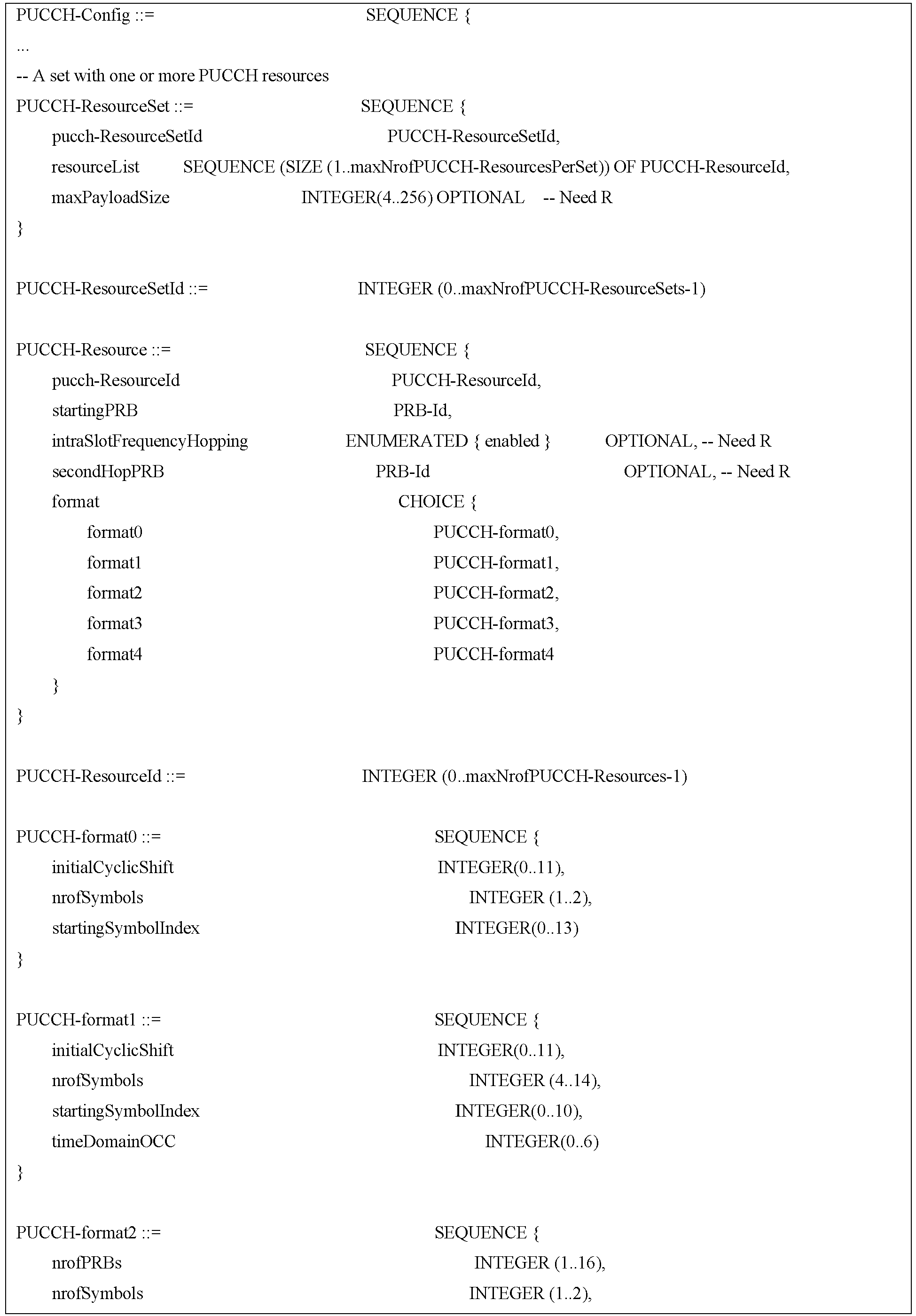

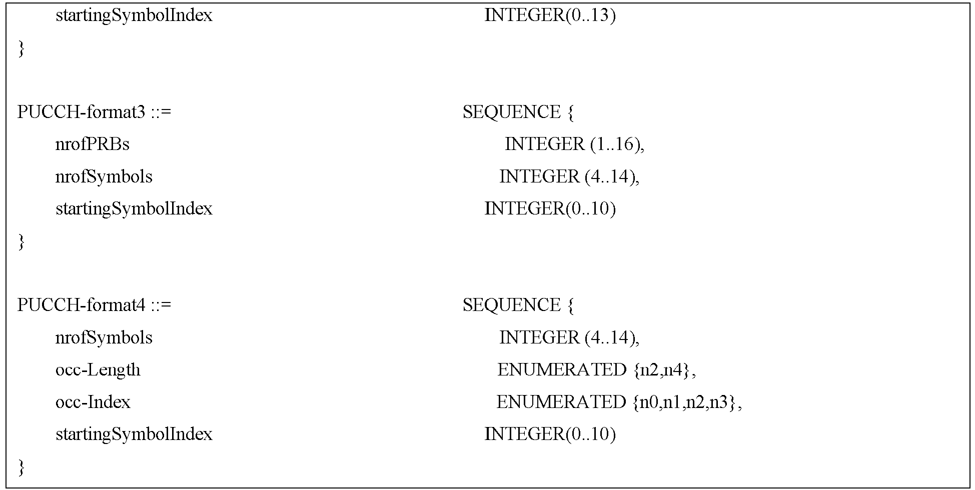

### <A. PUCCH transmission frequency resource determination method according to transmission slot type>

When there is a DL/guard subband within the UL BWP in the SBFD slot, the location and amount of PUCCH transmission frequency resources in the HD slot and the SBFD slot need to be different. To this end, PUCCH transmission frequency resources can be determined according to the slot type (e.g., HD slot or SBFD slot) of the slot in which PUCCH is transmitted, such as at least one of the following methods.

Method 1. The existing PUCCH resource configuration and indication method can be used as is, but the network may appropriately set PUCCH resources so that PUCCH is not transmitted on DL/guard subband resources and indicate the PRI (PUCCH resource indicator) value to be applied through DCI (e.g., DCI format 1_0, 1_1, 1_2, etc.).

For example, through a higher layer signal such as the aforementioned 'PUCCH-Config', a list of PUCCH resources may be set, and a specific value of the list may be indicated according to the value of the PRI field of the DCI. For example, if the number of bits in the PRI field is 2 bits, a value of '00' indicates the first PUCCH resource provided by the 'pucch-ResourceId' obtained from the first value in 'resourceList', a value of '01' indicates the second PUCCH resource provided by the 'pucch-ResourceId' obtained from the second value in 'resourceList', a value of '10' indicates the third PUCCH resource provided by the 'pucch-ResourceId' obtained from the third value in 'resourceList', and a value of '11' indicates the fourth PUCCH resource provided by the 'pucch-ResourceId' obtained from the fourth value in 'resourceList. The PRI field of DCI was previously limited to a maximum of 3 bits.

In this case, the PRI field size may be increased from the existing maximum of 3 bits to allow a wider range of PRI values to be specified, taking into account the different PUCCH resources available in the HD slot and the SBFD slot. In this case, for example, a UE that supports operation in an SBFD cell may operate assuming an extended PRI field size.

Method 2. The existing PUCCH resource setting method is used as is, but the PRI applied in the HD slot and the PRI applied in the SBFD slot may be independently indicated.

For example, the PRI applied in the HD slot and the PRI applied in the SBFD slot may be indicated respectively through the PRI field of the DCI.

In this case, the UE can determine the PUCCH resource by applying the PRI corresponding to the slot type (HD slot or SBFD slot) of the slot in which the PUCCH is transmitted.

Method 3. In addition to the existing PUCCH resource set, a separate PUCCH resource set for SBFD slots may be set.

For example, when multiple PUCCH resource sets are configured in 'PUCCH-Config', some PUCCH resource sets may be applied in HD slots, and the remaining PUCCH resource sets may be applied in SBFD slots.

In order to determine which slot type (HD slot or SBFD slot) each PUCCH resource set is applied to, for example, when setting a PUCCH resource set through 'PUCCH-ResourceSet', information on the slot type (HD slot or SBFD slot) to which the PUCCH resource set is applied may be set together. In the absence of such information, it may be determined as a PUCCH resource set applicable to the HD slot. In this case, the PUCCH resources included in the PUCCH resource set for the SBFD slot may be configured as frequency resources on which PUCCH is transmitted to avoid DL and guard subbands.

In this case, if the slot type of the slot in which the PUCCH is transmitted is an HD slot, the UE may determine the resource in which the PUCCH is transmitted by using the PUCCH resource sets applicable to the HD slot, and if the slot type of the slot in which the PUCCH is transmitted is an SBFD slot, the UE may determine the resource in which the PUCCH is transmitted by using the PUCCH resource sets applicable to the SBFD slot.

In this case, the UE may determine PUCCH resources by applying the same PRI to the UL slot and the SBFD slot. Alternatively, the PRI for the UL slot and the PRI for the SBFD slot may be set independently, and the PUCCH resource may be determined by applying the PRI corresponding to the slot type according to the slot type of the slot in which the PUCCH is transmitted.

The following table illustrates part of'PUCCH-Config' when using Method 3.

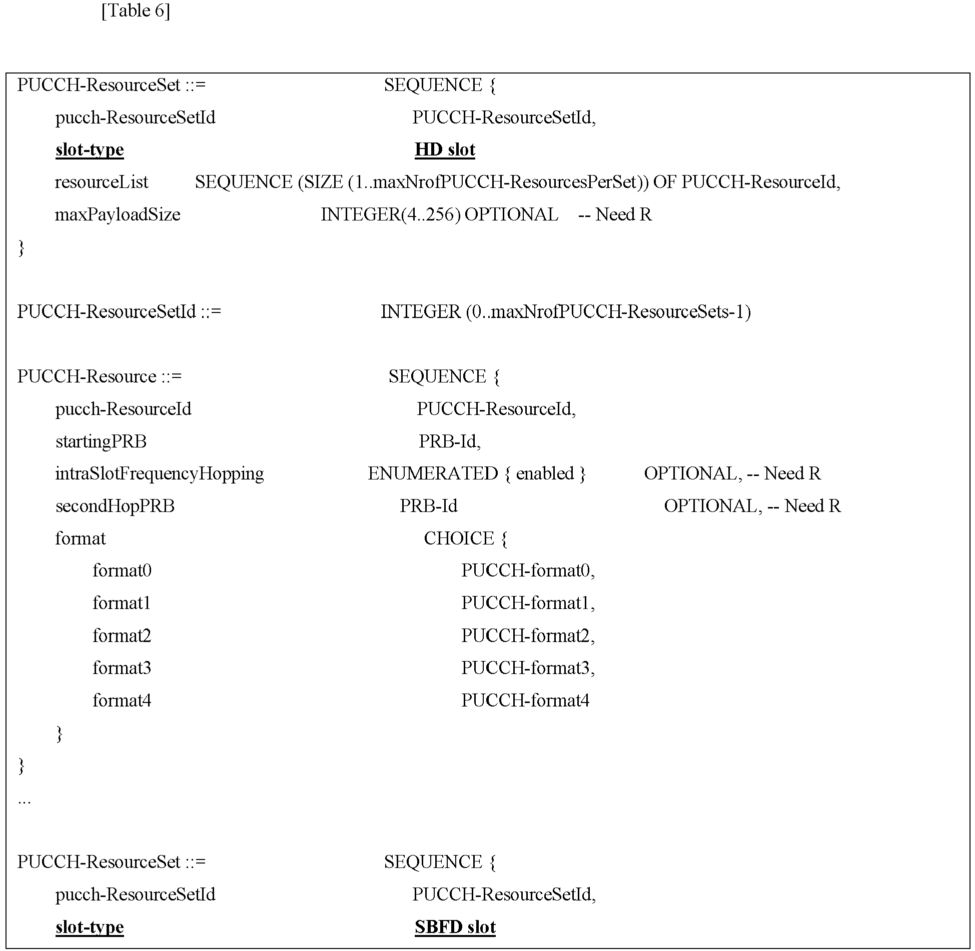

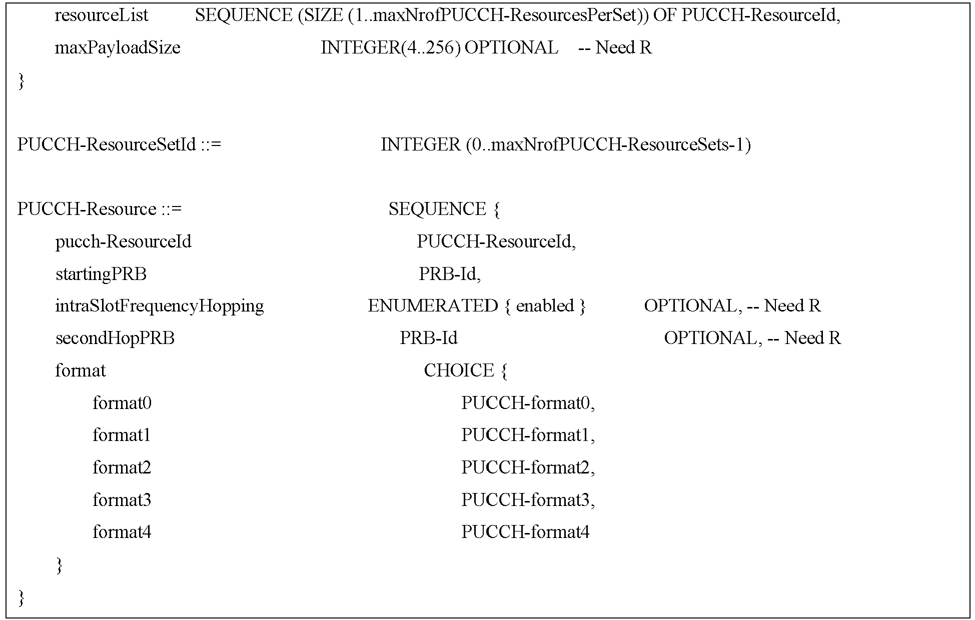

As shown in the table above, information (slot-type) indicating the slot type (HD slot or SBFD slot) to which the corresponding PUCCH resource set is applied may be included in the 'PUCCH-ResourceSet'.

Method 4. Within 'PUCCH-ResourceSet', a 'resourceList' for SFBD slots may be configured in addition to the existing 'resourceList'.

For a set of PUCCH resources, the PUCCH resources that make up that set may be set up independently for an HD slot and an SBFD slot. For example, a 'resourceList' for SBFD slots may be set in addition to the 'resourceList' set within the 'PUCCH-ResourceSet'. In this case, the existing 'resourceList' is applied on the HD slot and the additional 'resourceList' may be applied on the SBFD slot. The PUCCH resources included in the 'resourceList' for the SBFD slot may have the frequency resource on which the PUCCH is transmitted set to avoid DL and guard subbands.

In this case, if the slot type of the slot where the PUCCH is transmitted is HD slot, the UE may use the PUCCH resources included in the existing 'resourceList' applied to the HD slot to determine the resource where the PUCCH is transmitted, or if the slot type is SBFD slot, the PUCCH resources included in the 'resourceList' applied to the SBFD slot to determine the resource where the PUCCH is transmitted.

In this case, the UE may apply the same PRI to the UL slot and SBFD slot to determine the PUCCH resource. Alternatively, the PRI for the UL slot and the PRI for the SBFD slot may be set independently, and depending on the slot type of the slot where the PUCCH is transmitted, the PUCCH resource may be determined by applying the PRI corresponding to the slot type.

The following table shows an example of part of 'PUCCH-Config' when using method 4.

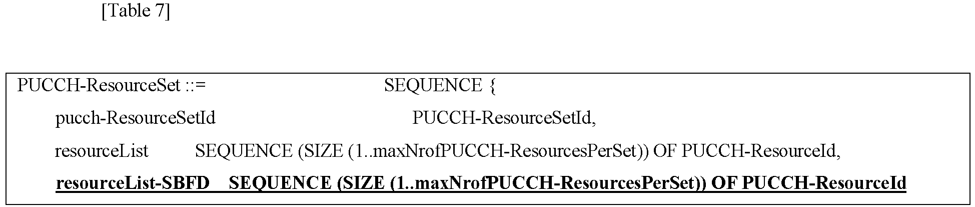

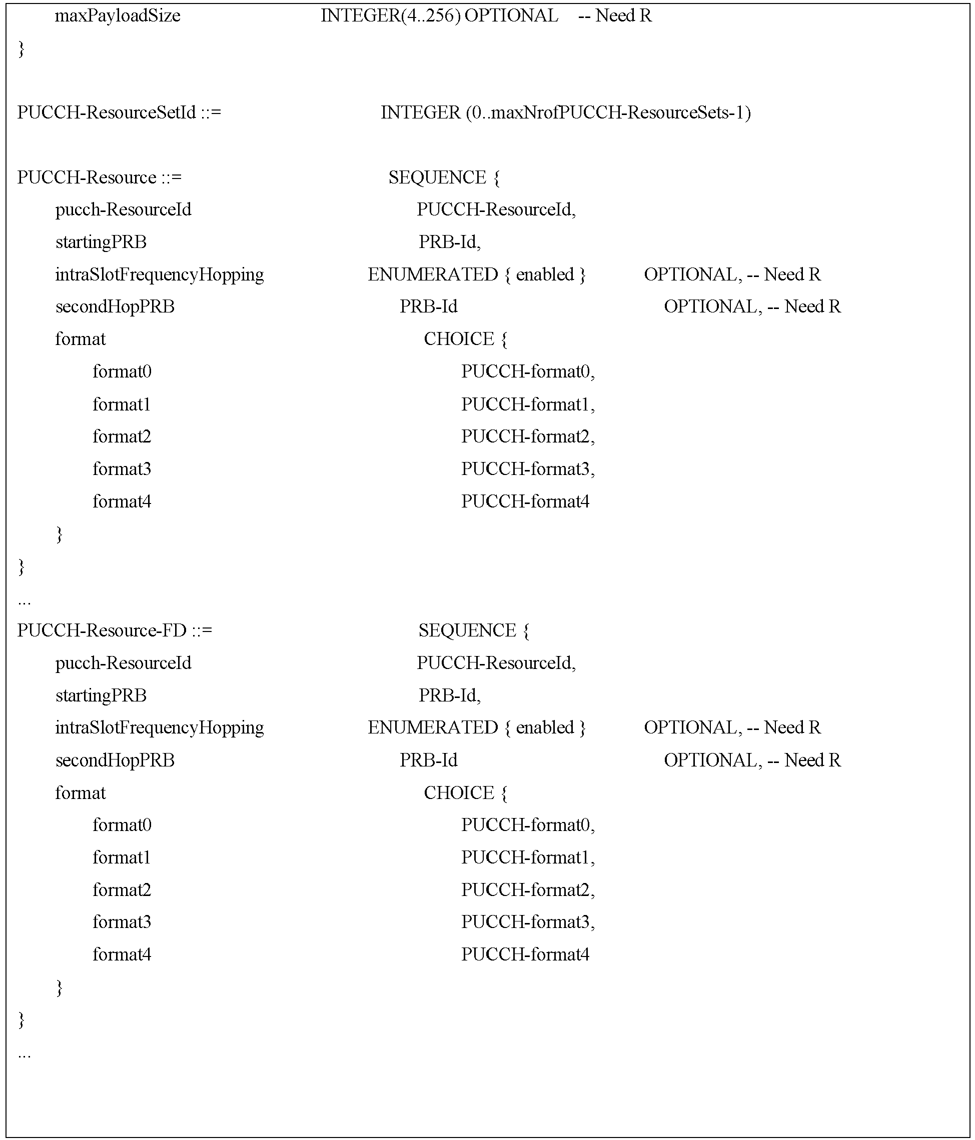

As shown in the table above, the existing 'resourceList' provides a list of PUCCH resources applied in the HD slot, and 'resourceList-SBFD' provides a list of PUCCH resources applied in the SBFD slot.

Method 5. Frequency resource information for SBFD slots may be set in addition to existing frequency resource information within PUCCH resources.

For example, in addition to the existing 'startingPRB' and 'secondHopPRB' within 'PUCCH-Resource', 'startingPRB' and/or 'secondHopPRB' for SBFD slots may be configured. Additionally, 'nrofPRBs' for SBFD slots may be set in addition to the existing 'nrofPRBs' in 'PUCCH-format2' and/or 'PUCCH-format3'. At this time, the existing 'startingPRB', 'secondHopPRB' and/or 'nrofPRBs' are applied in the HD slot, and additional 'startingPRB', 'secondHopPRB' and/or 'nrofPRBs' may be applied in the SBFD slot. 'startingPRB', 'secondHopPRB' and/or 'nrofPRBs' included in the 'resourceList' for SBFD slots may be set to avoid DL and guard subbands.

In this case, if the slot type of the slot in which the PUCCH is transmitted is an HD slot, the UE may determine the resource in which the PUCCH is transmitted by using the existing 'startingPRB', 'secondHopPRB' and/or 'nrofPRBs' applied to the HD slot, and if the slot type of the slot in which the PUCCH is transmitted is an SBFD slot, the UE may determine the resource in which the PUCCH is transmitted by using the 'startingPRB', 'secondHopPRB' and/or 'nrofPRBs' applied to the SBFD slot.

In this case, the UE may determine PUCCH resources by applying the same PRI to the UL slot and the SBFD slot. Or, the PRI for the UL slot and the PRI for the SBFD slot may be set independently, and the PUCCH resources may be determined by applying the PRI corresponding to the slot type according to the slot type of the slot in which the PUCCH is transmitted.

The following table illustrates part of'PUCCH-Config' when using Method 5.

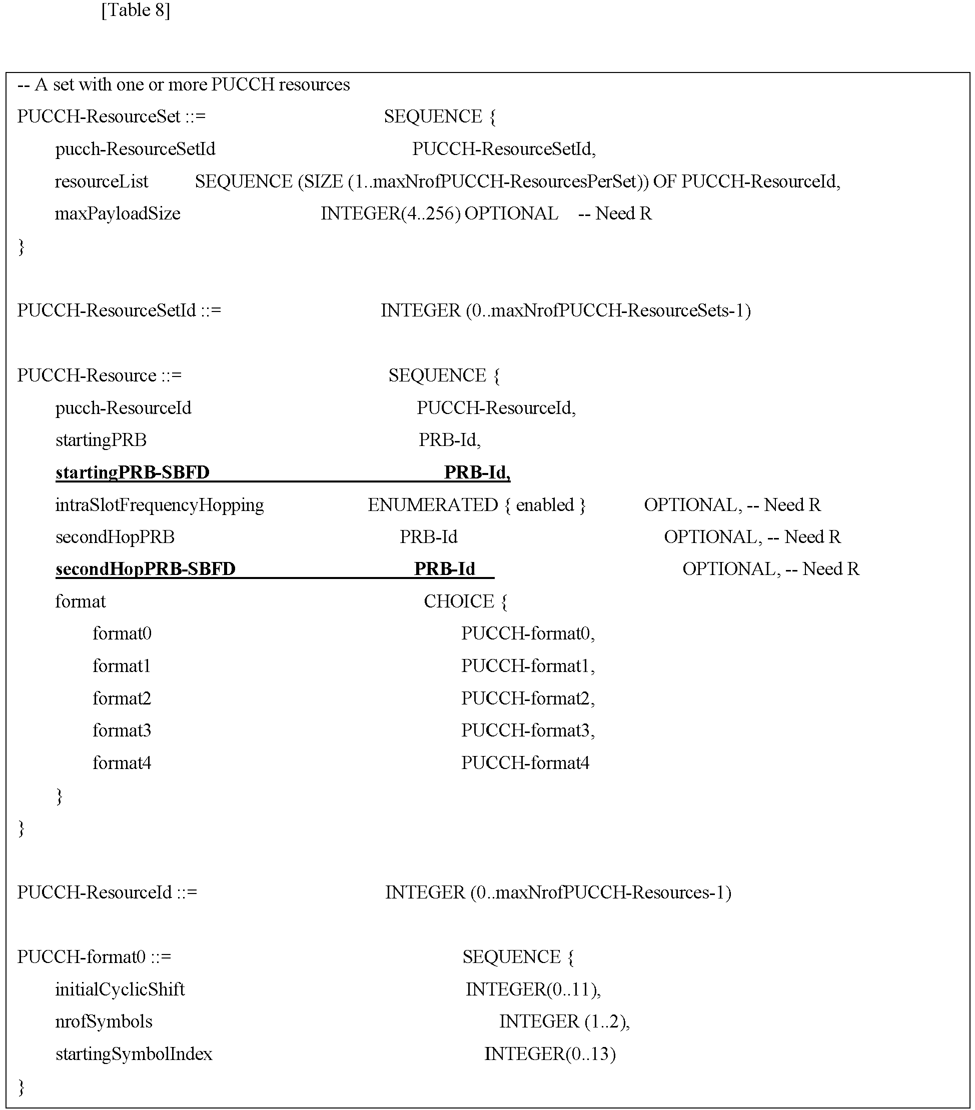

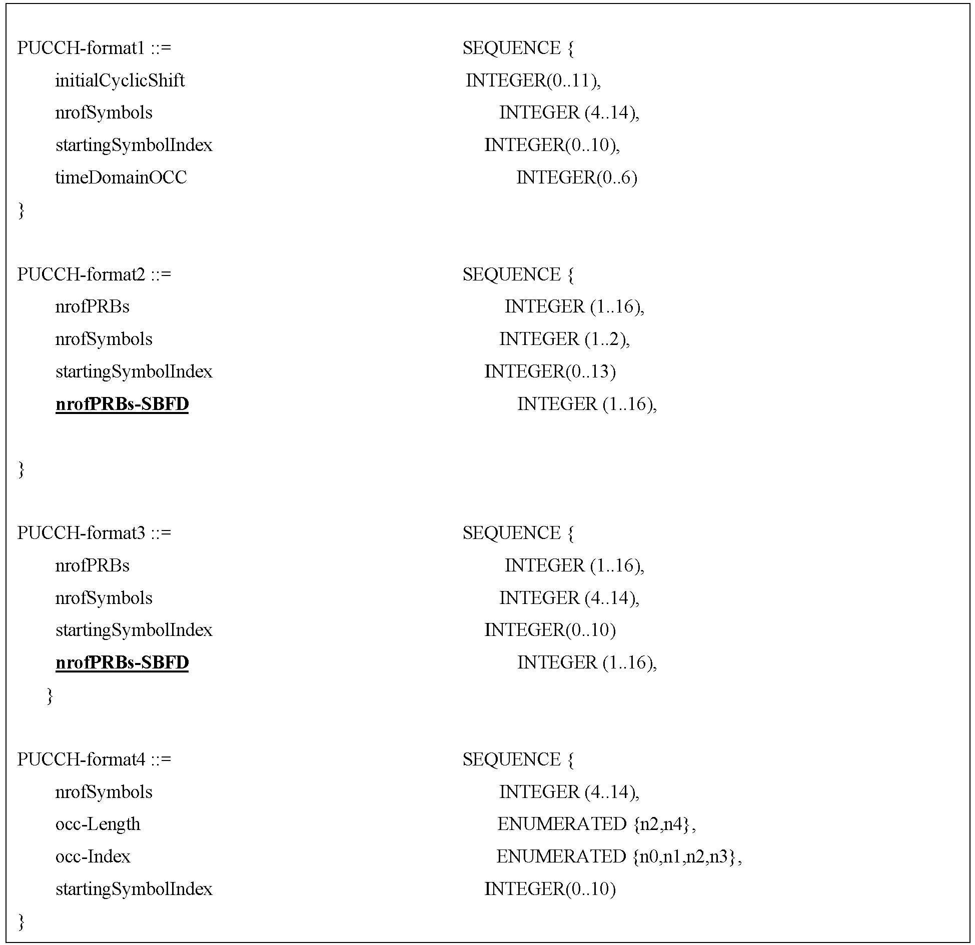

As shown in the table above, in addition to the existing 'startingPRB' and 'secondHopPRB' in 'PUCCH-Resource', 'startingPRB-SBFD' and/or 'secondHopPRB-SBFD' for SBFD slots may be set. Additionally, 'nrofPRBs-SBFD' for SBFD slots may be set in addition to the existing 'nrofPRBs' in 'PUCCH-format2' and/or 'PUCCH-format3'.

Considering the complexity/difficulty of configuring PRB resources for PUCCH transmission in SBFD slots considering frequency hopping, frequency hopping may be disabled in SBFD environments. The UE may determine that frequency hopping is not always applied in a SBFD environment.

FIG. 17 illustrates an operation method of a UE in a wireless communication system.

Referring to FIG. 17, the UE receives first physical uplink control channel (PUCCH) resource configuration information and second PUCCH resource configuration information that are independent of each other (S171).

The UE applies the first PUCCH resource configuration information or the second PUCCH resource configuration information to each slot of the plurality of slots to transmit PUCCH through the plurality of slots, wherein the first PUCCH resource configuration information or the second PUCCH resource configuration information is applied to a specific slot based on whether the specific slot of the plurality of slots is a half-duplex (HD) slot or a full-duplex (FD) slot (S172).

The first PUCCH resource configuration information may be applicable if the specific slot is an HD slot, and the second PUCCH resource configuration information may be applicable if the specific slot is an FD slot.

In accordance with an embodiment, at least one of the first PUCCH resource configuration information or the second PUCCH resource configuration information may comprise information indicating the type of slot to which the PUCCH resource is applied. This may refer to method 3 above.

According to an embodiment, each of the first PUCCH resource configuration information and the second PUCCH resource configuration information may provide a list of transmission resources for transmitting the PUCCH. The list of PUCCH transmission resources indicated by the first PUCCH resource configuration information may be applied to an HD slot, and the list of PUCCH transmission resources indicated by the second PUCCH resource configuration information may be applied to an FD slot. This may refer to the above-described method 4.

A UE may receive downlink control information (DCI), wherein the DCI includes a PRI (PUCCH resource indicator) field, and a specific PUCCH resource of a PUCCH transmission resource list may be indicated according to the value of the PRI field.

For example, through a higher layer signal such as 'PUCCH-Config', a first PUCCH transmission resource list for an HD slot and a second PUCCH transmission resource list for an FD slot are set. Thereafter, depending on the slot type of the slot and the value of the PRI field of the received DCI, a specific value of one of the lists of the first PUCCH transmission resource list and the second PUCCH transmission resource list may be indicated.

For example, if the slot type of the slot is an HD slot and the number of bits in the PRI field is 2, and if it is '00', it may indicate the first PUCCH resource provided by the 'pucch-ResourceId' obtained from the first value of the first PUCCH transmission resource list, if it is '01', it may indicate the second PUCCH resource provided by the 'pucch-ResourceId' obtained from the second value of the first PUCCH transmission resource list, if it is '10', it may indicate the third PUCCH resource provided by the 'pucch-ResourceId' obtained from the third value of the first PUCCH transmission resource list, and if it is '11', it may indicate the fourth PUCCH resource provided by the 'pucch-ResourceId' obtained from the fourth value of the first PUCCH transmission resource list.

For example, if the slot type of the slot is an FD slot and the number of bits in the PRI field is 2, and if it is '00', it may indicate the first PUCCH resource provided by the 'pucch-ResourceId' obtained from the first value of the second PUCCH transmission resource list, if it is '01', it may indicate the second PUCCH resource provided by the 'pucch-ResourceId' obtained from the second value of the second PUCCH transmission resource list, if it is '10', it may indicate the third PUCCH resource provided by the 'pucch-ResourceId' obtained from the third value of the second PUCCH transmission resource list, and if it is '11', it may indicate the fourth PUCCH resource provided by the 'pucch-ResourceId' obtained from the fourth value of the second PUCCH transmission resource list.

According to an embodiment, the first PUCCH resource configuration information may include i) information indicating a start PRB (physical resource block) of a candidate PUCCH resource, and ii) information indicating an index of a first PRB after frequency hopping of the PUCCH, for an HD slot. The second PUCCH resource configuration information may include i) information indicating a start PRB of a candidate PUCCH resource, and ii) information indicating an index of a first PRB after frequency hopping of the PUCCH, for an FD slot. In addition, the second PUCCH resource configuration information may further include information indicating the number of PRBs for a specific DCI format. This may refer to method 5 described above.

In some embodiments, if the specific slot is an FD slot, the second PUCCH resource configuration information may be applied to all of the plurality of slots.

An FD slot may mean a subband full duplex (SBFD) slot that includes both downlink subband resources and uplink subband resources distinguished in the frequency domain within the slot.

In some embodiments, downlink control information (DCI) may include information indicating whether the specific slot is an HD slot or an FD slot. For example, the DCI includes a PRI (PUCCH resource indicator) field, and some bits of the PRI field may indicate whether the specific slot is an HD slot or an FD slot.

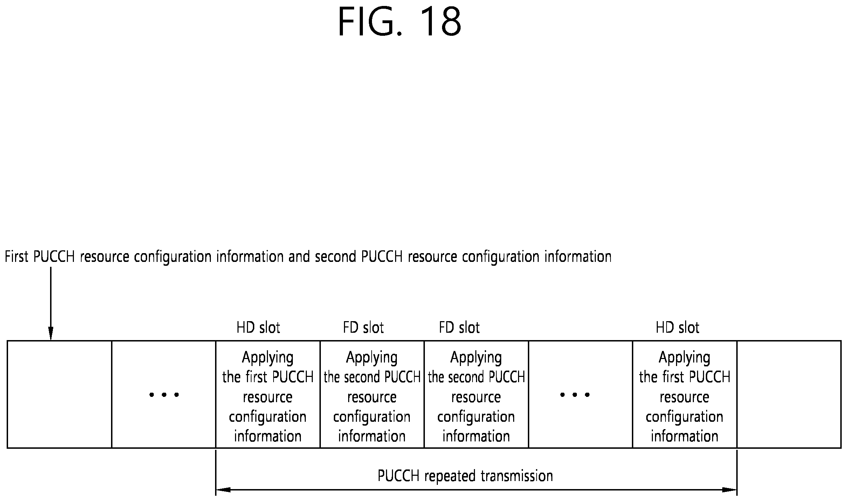

FIG. 18 illustrates a method of applying PUCCH resource configuration information when performing PUCCH repeated transmission in a situation where HD slots and FD slots coexist.

Referring to FIG. 18, the UE receives first PUCCH resource configuration information and second PUCCH resource configuration information through a higher layer signal.

After that, PUCCH repeated transmission may be performed, and if a specific slot among the plurality of slots for this is an HD slot, the first PUCCH resource configuration information is applied, and if it is an FD slot, the second PUCCH resource configuration information is applied.

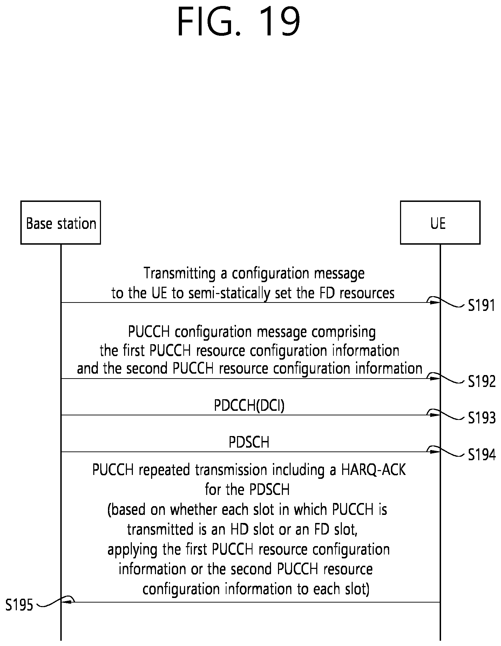

FIG. 19 illustrates a signaling process between a base station and a UE according to the method described in FIG. 17.

Referring to FIG. 19, the base station transmits a configuration message to the UE to semi-statically set the FD resources (S191).

The base station transmits a PUCCH configuration message (e.g., 'PUCCH-Config' in the various examples described above) comprising the first PUCCH resource configuration information and the second PUCCH resource configuration information to the UE (S192).

The base station transmits a DCI via PDCCH to the UE (S193) and transmits a PDSCH scheduled by the DCI (S194).

The UE repeatedly transmits a PUCCH including a HARQ-ACK for the PDSCH (S195). Here, based on whether each slot in which PUCCH is transmitted is an HD slot or an FD slot, the PUCCH transmission resource can be determined/used by applying the first PUCCH resource configuration information or the second PUCCH resource configuration information to each slot.

This process is described in detail in FIG.s 17 and 18.

According to the method of the present disclosure, even when a plurality of slots performing PUCCH repeated transmission include both HD slots and FD slots, PUCCH repeated transmission can be performed using appropriate resources.

That is, the efficiency of resource use increases in PUCCH repeated transmission.

### <B. Method for determining transmission frequency resources per slot during PUCCH repetition>

Meanwhile, when PUCCH is repeatedly transmitted through multiple slot resources, PUCCH may be transmitted across HD slots and SBFD slots. In such cases, the UE needs to decide which slot type to determine the PUCCH frequency resources based on.

This disclosure proposes a method for determining the slot type (HD slot or SBFD slot) that is the basis for determining the PUCCH transmission frequency resource for each PUCCH transmission slot.

The contents of the present disclosure can also be applied to the case where PUCCH is transmitted without repetition (i.e., when the number of repetitions is 1).

Alt 1. For each slot resource where PUCCH is repeatedly transmitted, in the HD slot, the location of the frequency resource where PUCCH is transmitted may be determined and applied based on the HD slot, and in the SBFD slot, the location of the frequency resource where PUCCH is transmitted may be determined and applied based on the SBFD slot. In this case, for the same PUCCH, the frequency resources that constitute the PUCCH transmission may vary depending on the slot in which the PUCCH is repeatedly transmitted.

Alt 2. If the slot resources through which PUCCH is repeatedly transmitted include at least one SBFD slot, the location of the frequency resources through which PUCCH is transmitted may be determined and applied based on the SBFD slot among all PUCCH transmission slot resources.

Alt 3. When a cell operates in SBFD, or when there is a slot in the cell that operates in SBFD, the location of the frequency resource where the PUCCH is transmitted may always be determined and applied based on the SBFD slot among the slot resources where the PUCCH is repeatedly transmitted. This method may be applied even if the slot resources in which PUCCH is repeatedly transmitted do not include SBFD slots.

Alt 4. For slot resources where PUCCH is transmitted repeatedly, the location of the frequency resource where PUCCH is transmitted may be determined and applied based on the same slot type among HD slots and SBFD slots. At this time, information on the slot type for determining the frequency resource of PUCCH (information indicating either an HD slot or an SBFD slot) may be dynamically indicated by the base station through RRC/DCI, etc. More specifically, the following methods can be applied.

Alt 4-1. The slot type of the slot in which PUCCH is transmitted may be indicated through an explicit field in the DCI.

Alt 4-2. The slot type of the slot in which PUCCH is transmitted may be indicated through the PRI field in the DCI. For example, some bit(s) of the PRI field may be used to indicate the slot type of the slot in which the PUCCH is transmitted. Alternatively, if a specific value(s) is indicated through the PRI field, this may be interpreted to mean that the slot type of the slot in which the PUCCH is transmitted is an SBFD slot.

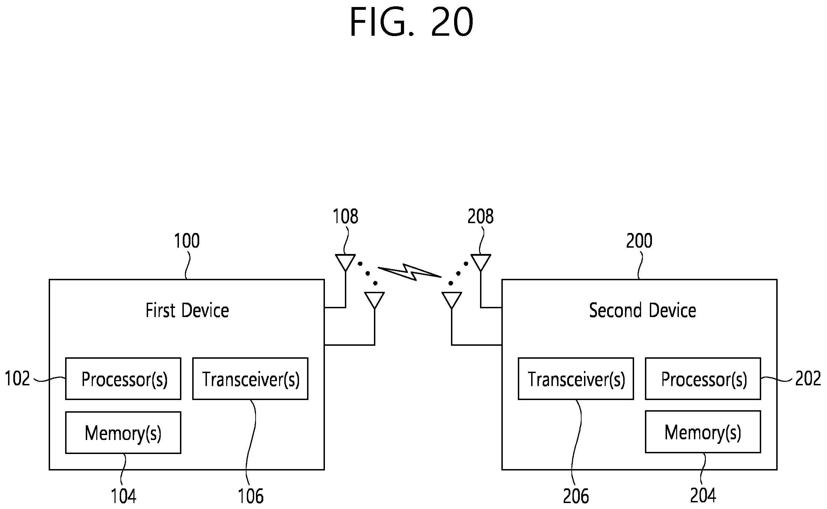

FIG. 20 illustrates a wireless device applicable to the present specification.

Referring to FIG. 20, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 receives first physical uplink control channel (PUCCH) resource configuration information and second PUCCH resource configuration information that are independent of each other, and transmits a PUCCH over a plurality of slots by applying the first PUCCH resource configuration information or the second PUCCH resource configuration information to each slot of the plurality of slots. Here, the first PUCCH resource configuration information or the second PUCCH resource configuration information is applied to a specific slot of the plurality of slots based on whether the specific slot is a half-duplex (HD) slot or a full-duplex (FD) slot.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits, to a user equipment (UE), first physical uplink control channel (PUCCH) resource configuration information and second PUCCH resource configuration information that are independent of each other and receives, in each slot of a plurality of slots, a PUCCH from the UE at a PUCCH resource according to the first PUCCH resource configuration information or the second PUCCH resource configuration information. Based on whether a specific slot of the plurality of slots is a half-duplex (HD) slot or a full-duplex (FD) slot, the PUCCH resource is determined by the first PUCCH resource configuration information or by the second PUCCH resource configuration information.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: receiving first physical uplink control channel (PUCCH) resource configuration information and second PUCCH resource configuration information that are independent of each other and transmitting a PUCCH over a plurality of slots by applying the first PUCCH resource configuration information or the second PUCCH resource configuration information to each slot of the plurality of slots. Here, the first PUCCH resource configuration information or the second PUCCH resource configuration information is applied to a specific slot of the plurality of slots based on whether the specific slot is a half-duplex (HD) slot or a full-duplex (FD) slot.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

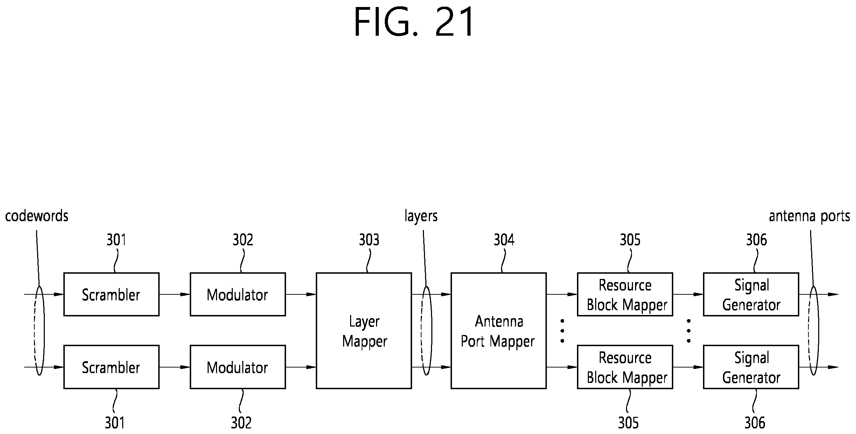

FIG. 21 shows an example of a structure of a signal processing module. Herein, signal processing may be performed in the processors 102 and 202 of FIG. 20.

Referring to FIG. 21, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

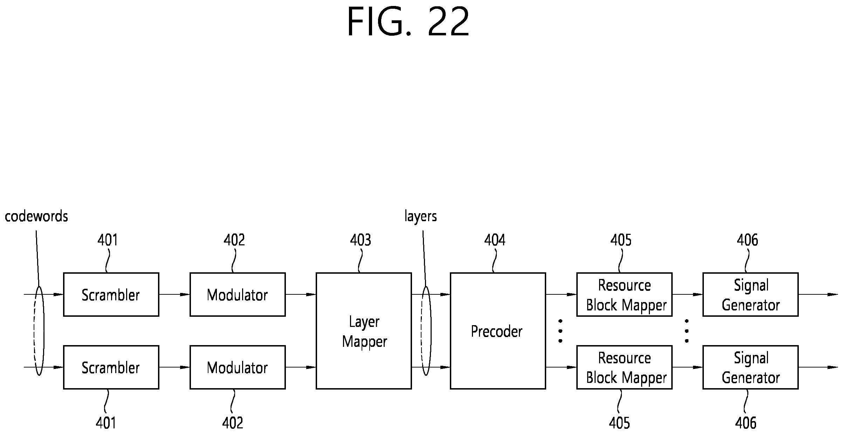

FIG. 22 shows another example of a structure of a signal processing module in a transmitting device. Herein, signal processing may be performed in a processor of a UE/BS, such as the processors 102 and 202 of FIG. 20.

Referring to FIG. 22, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

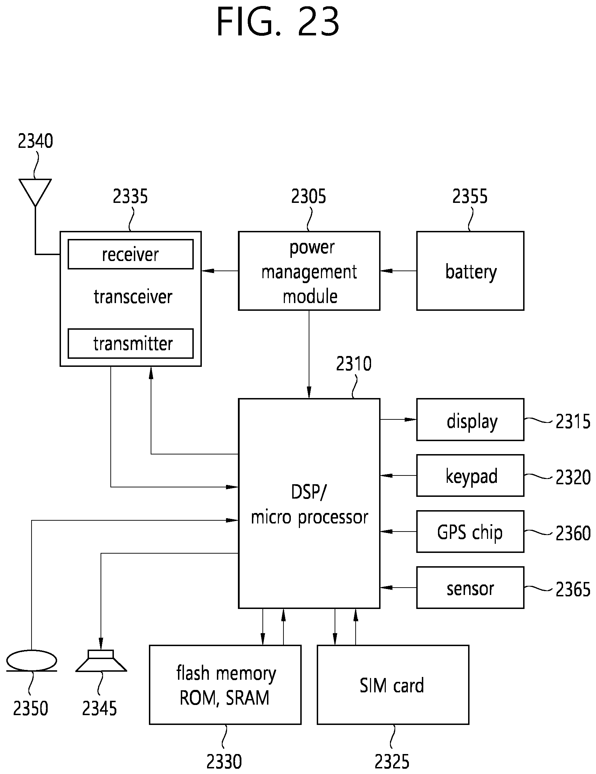

FIG. 23 illustrates an example of a wireless communication device according to an implementation example of the present disclosure.

Referring to FIG. 23, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 23 may be the processors 102 and 202 in FIG. 20.

The memory 2330 is connected to the processor 2310 and stores information related to operations of the processor. The memory may be located inside or outside the processor and connected to the processor through various techniques such as wired connection and wireless connection. The memory 2330 in FIG. 23 may be the memories 104 and 204 in FIG. 20.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

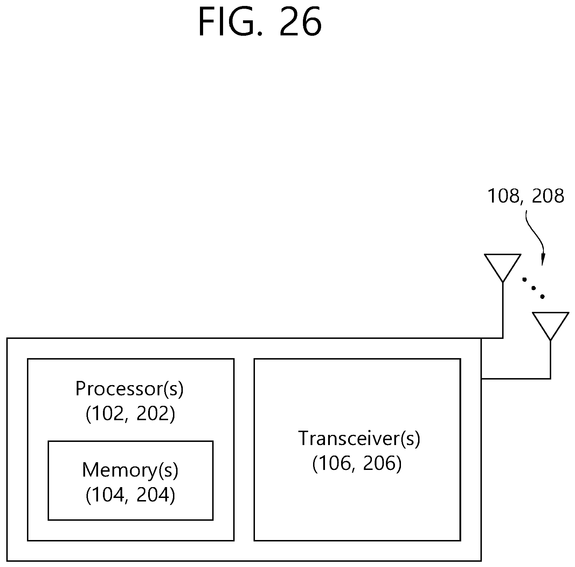

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 23 may be the transceivers 106 and 206 in FIG. 26.

Although not shown in FIG. 23, various components such as a camera and a universal serial bus (USB) port may be additionally included in the UE. For example, the camera may be connected to the processor 2310.

FIG. 23 is an example of implementation with respect to the UE and implementation examples of the present disclosure are not limited thereto. The UE need not essentially include all the components shown in FIG. 23. That is, some of the components, for example, the keypad 2320, the GPS chip 2360, the sensor 2365 and the SIM card 2325 may not be essential components. In this case, they may not be included in the UE.

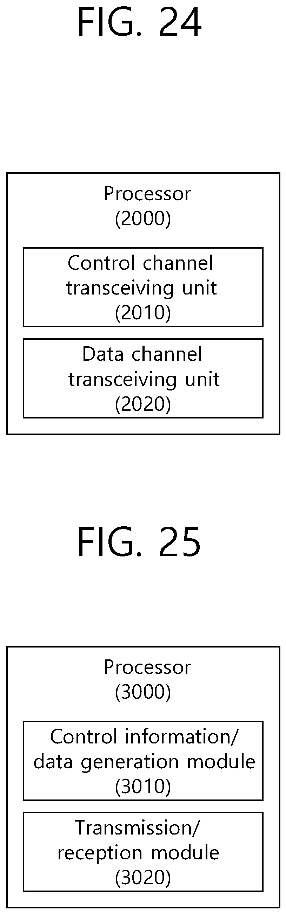

FIG. 24 shows an example of the processor 2000.

Referring to FIG. 24, The processor 2000 may include a control channel transceiver 2010 and a data channel transceiver 2020. For example, the processor 2000 may execute the methods described in FIGS. 17 to 19 from the UE perspective. The processor 2000 may be an example of the processors 102 and 202 of FIG. 20.

FIG. 25 shows an example of the processor 3000.

Referring to FIG. 25, The processor 3000 may include a control information/data generation module 3010 and a transmit/receive module 3020. The processor 3000 may execute the methods described in FIGS 17 to 19, for example, from the perspective of a base station or network. The processor 3000 may be an example of the processors 102, 202 of FIG. 20.

FIG. 26 shows another example of a wireless device.

Referring to FIG. 26, the wireless device may include one or more processors 102 and 202, one or more memories 104 and 204, one or more transceivers 106 and 206 and one or more antennas 108 and 208.

The example of the wireless device described in FIG. 26 is different from the example of the wireless described in FIG. 20 in that the processors 102 and 202 and the memories 104 and 204 are separated in FIG. 20 whereas the memories 104 and 204 are included in the processors 102 and 202 in the example of FIG. 26. That is, the processor and the memory may constitute one chipset.

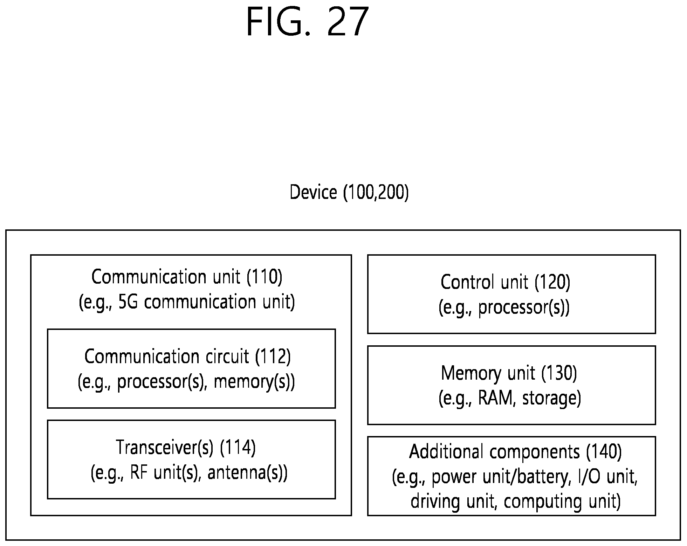

FIG. 27 shows another example of a wireless device applied to the present specification. The wireless device may be implemented in various forms according to a use-case/service.

Referring to FIG. 27, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 ofFIG. 34, the XR device 100c of FIG. 34, the hand-held device 100d of FIG. 34, the home appliance 100e of FIG. 34, the IoT device 100f ofFIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 27, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

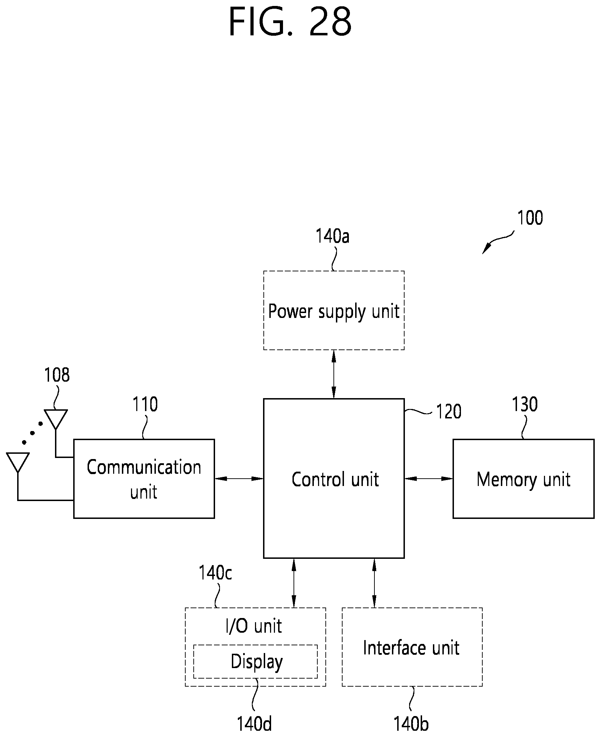

FIG. 28 illustrates a hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 28, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c respective correspond to the blocks 110 to 130/140 of FIG. 27.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. In addition, the memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

For example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. In addition, the communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

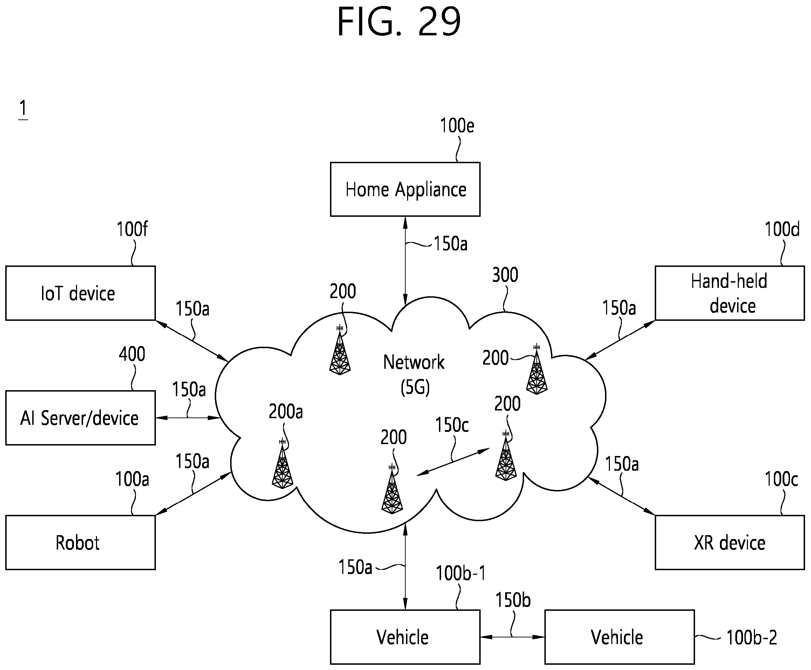

FIG. 29 illustrates a communication system 1 applied to the present specification.

Referring to FIG. 29, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 9. For convenience of explanation, among the frequency ranges that are used in an NR system, FR1 may mean a "sub 6GHz range", and FR2 may mean an "above 6GHz range" and may also be referred to as a millimeter wave (mmW).

**[Table 9]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 10 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 10] [388]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a user equipment (UE) in a wireless communication system, the method comprising:
receiving first physical uplink control channel (PUCCH) resource configuration information and second PUCCH resource configuration information that are independent of each other; and
transmitting a PUCCH over a plurality of slots by applying the first PUCCH resource configuration information or the second PUCCH resource configuration information to each slot of the plurality of slots,
wherein the first PUCCH resource configuration information or the second PUCCH resource configuration information is applied to a specific slot of the plurality of slots based on whether the specific slot is a half-duplex (HD) slot or a full-duplex (FD) slot.

2. The method of claim 1, wherein the first PUCCH resource configuration information is applied based on the specific slot being an HD slot, and the second PUCCH resource configuration information is applied based on the specific slot being an FD slot.

3. The method of claim 1, wherein at least one of the first PUCCH resource configuration information or the second PUCCH resource configuration information includes information for a type of slot to which a PUCCH resource is applied.

4. The method of claim 1, wherein each of the first PUCCH resource configuration information and the second PUCCH resource configuration information informs a list of transmission resources for transmission of the PUCCH.

5. The method of claim 4, further comprising:
receiving downlink control information (DCI),
wherein the DCI includes a PRI (PUCCH resource indicator) field, and a specific PUCCH resource of the list is indicated based on a value of the PRI field.

6. The method of claim 1, wherein the first PUCCH resource configuration information informs a list of candidate PUCCH resources for an HD slot, and the second PUCCH resource configuration information informs a list of candidate PUCCH resources for an FD slot.

7. The method of claim 1, wherein the first PUCCH resource configuration information comprises, for an HD slot, i) information for a starting physical resource block (PRB) of a candidate PUCCH resource and ii) information for an index of a first PRB after frequency hopping of a PUCCH, and
wherein the second PUCCH resource configuration information comprises, for an FD slot, i) information for a starting PRB of a candidate PUCCH resource, and ii) information for an index of a first PRB after frequency hopping of a PUCCH.

8. The method of claim 7, wherein the second PUCCH resource configuration information further comprises information for a number of PRBs for a specific DCI format.

9. The method of claim 1, wherein based on the specific slot being an FD slot, the second PUCCH resource configuration information is applied to all of the plurality of slots.

10. The method of claim 1, wherein the FD slot is a subband full duplex (SBFD) slot comprising both downlink subband resources and uplink subband resources distinguished in a frequency domain within a slot.

11. The method of claim 1, further comprising:
receiving downlink control information (DCI) including information informing whether the specific slot is an HD slot or an FD slot.

12. The method of claim 11, wherein the DCI includes a PRI (PUCCH resource indicator) field, and some bits of the PRI field inform whether the specific slot is an HD slot or an FD slot.

13. A user equipment (UE), comprising:
a transceiver;
at least one memory; and
at least one processor operably coupled to the at least one memory and the transceiver, wherein the processor is adapted to:
receive first physical uplink control channel (PUCCH) resource configuration information and second PUCCH resource configuration information that are independent of each other; and
transmit a PUCCH over a plurality of slots by applying the first PUCCH resource configuration information or the second PUCCH resource configuration information to each slot of the plurality of slots,
wherein the first PUCCH resource configuration information or the second PUCCH resource configuration information is applied to a specific slot of the plurality of slots based on whether the specific slot is a half-duplex (HD) slot or a full-duplex (FD) slot.

14. An apparatus of a user equipment (UE), the apparatus comprising:
at least one memory; and
at least one processor operably coupled to the at least one memory,
wherein the processor is adapted to:
receive first physical uplink control channel (PUCCH) resource configuration information and second PUCCH resource configuration information that are independent of each other; and
transmit a PUCCH over a plurality of slots by applying the first PUCCH resource configuration information or the second PUCCH resource configuration information to each slot of the plurality of slots,
wherein the first PUCCH resource configuration information or the second PUCCH resource configuration information is applied to a specific slot of the plurality of slots based on whether the specific slot is a half-duplex (HD) slot or a full-duplex (FD) slot.

15. At least one computer readable medium (CRM) having instructions to be executed by at least one processor to perform operations includes:
receiving first physical uplink control channel (PUCCH) resource configuration information and second PUCCH resource configuration information that are independent of each other; and
transmitting a PUCCH over a plurality of slots by applying the first PUCCH resource configuration information or the second PUCCH resource configuration information to each slot of the plurality of slots,
wherein the first PUCCH resource configuration information or the second PUCCH resource configuration information is applied to a specific slot of the plurality of slots based on whether the specific slot is a half-duplex (HD) slot or a full-duplex (FD) slot.

16. A method of operating a base station in a wireless communication system, the method comprising:
transmitting, to a user equipment (UE), first physical uplink control channel (PUCCH) resource configuration information and second PUCCH resource configuration information that are independent of each other; and
receiving, in each slot of a plurality of slots, a PUCCH from the UE at a PUCCH resource according to the first PUCCH resource configuration information or the second PUCCH resource configuration information,
wherein, based on whether a specific slot of the plurality of slots is a half-duplex (HD) slot or a full-duplex (FD) slot, the PUCCH resource is determined by the first PUCCH resource configuration information or by the second PUCCH resource configuration information.

17. A base station (BS), comprising:
a transceiver,
at least one memory; and
at least one processor operably coupled to the at least one memory and the transceiver, wherein the processor is adapted to:
transmit, to a user equipment (UE), first physical uplink control channel (PUCCH) resource configuration information and second PUCCH resource configuration information that are independent of each other; and
receive, in each slot of a plurality of slots, a PUCCH from the UE at a PUCCH resource according to the first PUCCH resource configuration information or the second PUCCH resource configuration information,
wherein, based on whether a specific slot of the plurality of slots is a half-duplex (HD) slot or a full-duplex (FD) slot, the PUCCH resource is determined by the first PUCCH resource configuration information or by the second PUCCH resource configuration information.
